# EUROPEAN PATENT SPECIFICATION

(11) **EP 4 087 713 B1**
(45) Date of publication and mention of the grant of the patent: **18.09.2024**
(21) Application number: 20911457.8
(22) Date of filing: 09.01.2020
(51) Int. Cl.: B25J 15/02, B25J 15/08, B25J 9/14, B25J 15/04

(54) **PNEUMATIC PARALLEL GRIPPER**
PNEUMATISCHER PARALLELGREIFER
DISPOSITIF DE PRÉHENSION PARALLÈLE PNEUMATIQUE

(43) Date of publication of application: 16.11.2022
(73) Proprietor: ITT Manufacturing Enterprises, LLC, Wilmington, DE 19801 (US)
(72) Inventor: GOTTHELF, Jeffrey B., Wilmington, Delaware 19801 (US)
(74) Representative: Elkington and Fife LLP
(86) International application number: PCT/US2020/012846
(87) International publication number: WO 2021/141585

(56) References cited:
- WO-A1-2019/194680
- WO-A1-98/15393
- CN-A- 106 426 254
- CN-A- 107 253 140
- CN-U- 205 114 312
- US-A- 5 529 359
- US-A- 5 529 359
- US-A1- 2012 205 930
- US-B1- 6 394 521
- US-B1- 6 412 845

## Description

### BACKGROUND

Unless otherwise indicated herein, the materials described in this section are not prior art to the claims in this application and are not admitted as prior art by inclusion in this section.

Grippers are useful in automated manufacturing operations to grasp, manipulate, and place objects. A gripper may be adapted for controlled robotic operation such that assembly line operation is efficient. Grippers come in a variety of styles, including claw style grippers, parallel grippers, and rotary grippers, to name a few. Some grippers may be described as centric grippers while others may be referred to as angular grippers. Additionally, some grippers may be described as bellows, magnetic, or vacuum grippers while others may be pneumatic, hydraulic or servo-electric.

A parallel gripper uses parallel motion of opposing jaws to effectively grip, manipulate, and place objects. Parallel grippers can be found in two jaw applications, where there are two points of contact made by the gripper, or in three jaw applications, where three points of contact made by the gripper.

CN 106426254 A describes a rotary assembly robot gripper comprising a frame, a left gripper arm, linear guide rails, a connecting plate, a right gripper arm, gripper bodies, a servo motor, cylinders, hinge pedestals, connecting rods, and a synchronous rotation mechanism.

US 5529359 A describes a gripper assembly having a unitary housing with a cylinder bore and a pair of pistons slidably disposed within the cylinder bore and having a finger carrier connected to each of the pistons.

CN 205114312 U describes a carry tight positioner of a fastener, including a line rail, a swing arm, an arm lock mechanism and a cylinder.

CN 107253140 A describes a kind of perceptual positioning clamping synthesis device for being applied to a hardware clamp type tool.

### SUMMARY

The present disclosure generally describes pump devices with a removeable portion to configure and/or customize the pump for different applications.

In some examples, there is provided a synchronized parallel gripper device according to claim 1.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The foregoing and other features of this disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings, in which:
FIG. 1 illustrates a parallel gripper device from varying perspectives;
FIG. 2 illustrates a cut view of a parallel gripper device along the A-A axis;
FIG. 3 illustrates a cut view of a parallel gripper device along the B-B axis;
FIG. 4 illustrates a cut view of a parallel gripper device along the C-C axis;
FIG. 5 illustrates a close-up view of section D of a parallel gripper device
FIG. 6 illustrates a full-assembly view of a parallel gripper device;
FIG. 7 illustrates a partial-assembly view of a parallel gripper device; and
FIG. 8 illustrates a partial-assembly view of a parallel gripper device adapted for use with various example jaws;
all arranged in accordance with at least some embodiments described herein.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting.

This disclosure is generally drawn, *inter alia,* to methods, apparatus, systems and/or devices that are configured for use as a pneumatic parallel gripper.

Briefly stated, technologies are generally described for pneumatically actuated parallel grippers that include a frame, a linkage system, two pistons, and a pair of slidable plates. The linkage system includes three or more links comprising a central link that is pivotably coupled to the frame, a first link coupled between a first piston and a first end of the central link, and a second link coupled between a second piston and a second end of the central link. The linkage system is arranged to synchronize motion between the first and second pistons. The pistons are further coupled to the slidable plates such that synchronized movement of the pistons translates into synchronized motion of the slidable plates. The parallel gripper is readily adaptable for use in gripper applications; and it is simple to service without the necessity for costly high tolerance and high precision parts.

The present disclosure recognizes that the clamping force of a parallel gripper can be increased by design of a pneumatically driven parallel gripper that utilizes a substantially symmetrical cylinder arrangement. Each cylinder has a corresponding piston and piston rod that is mated to a shoe, where motion of the piston is linked to motion of the shoe. A centrally located pivot link mechanism couples together the opposing pistons for synchronized operation. The synchronized operation of the piston translates into synchronized operation of the shoe, which guides gripper movement along a channel of the device.

The described technologies provide for a robust and cost-effective way to synchronize movement in a pneumatically driven parallel gripper. A linkage system is adapted to synchronize the movement of pistons in the gripper. The present linkage system does not require tight tolerances and high precision components to prevent backlash clearances, as may be found in conventional rack and pinion linkage systems. Instead, the presently disclosed devices use bushings and linkage bores to tie the operation of the pistons together. The bushings are secured using bolts and have clearance to allow them to be secured in the desired assembled locations, without the need for extremely precise machining location for the bolting. In assembly, the pistons can be fully extended or retracted, depending on whether the assembly will be used for inside or outside gripping, and the bolts can be tightened to allow the linkage to be perfectly synchronized to the piston stops of each cylinder. Although all mechanical linkage systems experience wear, the presently disclosed linkage system is very easy to maintain and repair when the need arises.

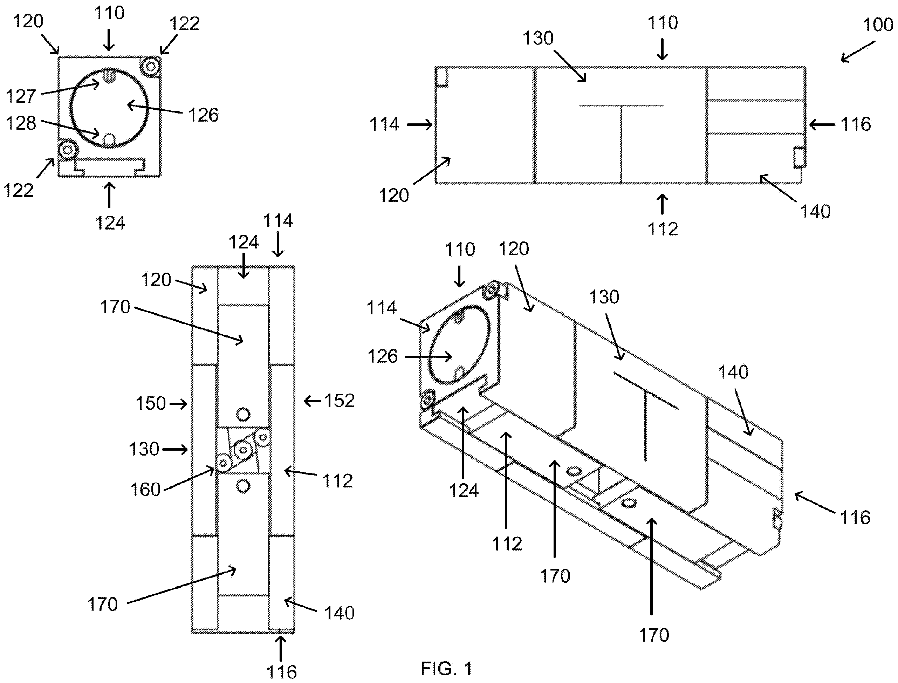

FIG. 1 illustrates a parallel gripper device 100 that is arranged according to aspects of the present disclosure. Several views are illustrated in FIG. 1, including a side profile view, an angled profile view, a bottom view, and an end view. The illustrated parallel gripper device includes a mounting frame 100 (or frame means), which extends longitudinally between ends 114 and 116. The mounting frame 100 also includes a top portion 110, a bottom portion 112, cylinder portions 120 and 140, and a central portion 130. A first cylinder portion 120 is located between end 114 and middle portion 130; while a second cylinder portion 140 of the mounting frame 100 is located between another end 116 and the central portion 130.

At each of the ends 114, 116 there are one or more retaining bolts 122 (or coupler means) located about a corner of the end, where each retaining bolt 122 is adapted to affix a corresponding one of the cylinder portions 129 and 140 to an end of the central portion 130. Each of the ends 114, 116 further includes a cover plate 126, which is adapted to cover and seal the corresponding one of the cylinders portions 120 and 140. The cover plate (or cover means) may include two slots 127, 128. The slots may be used to wind a retention wire (e.g., a square retention wire, or retention means) between grooves in the cover plate and the cylinder bore; such that the retention wire can hold the cover and cover seal in place when pressure is applied to urge each piston. In some examples, the cover plate has a seal ring which may be made of any appropriate sealing material such as Nitrile, Viton, urethane, or some other rubber material.

A channel 124 is located on the bottom portion 112 of the frame 100. The channel 124 is configured to hold a pair of slidable plate 170, where each of the slidable plates 170 (or slidable means) is coupled (e.g., by fastener or other coupler means) to the pneumatically operated pistons (or piston means) such that actuation of the gripper device causes the slidable plates 170 to slidably move along the length of the channel 124 as the pistons move. Moreover, the slidable plates 170 include one or more mounting points such as a machine screw thread (or coupler means), for example, so that the slidable plate can be mounted to a device (not shown) to adapt the gripper for use in a particular application. For example, a pair of opposed jaws (or grasp means) may be mounted to the slidable plates such that actuation of the gripper results in the jaws closing or opening. The jaws may be configured to clamp directly on a workpiece or part, or may be fitted with pins or slots to engage features of the workpiece for gripping, movement, manipulation, or squeezing operations on the part during an assembly process.

The central portion 130 of the frame 100 includes a set of couplers or links 160 (or link means), which are configured to couple the pistons (or piston means) contained within the cylinder portions 120 and 240 such that they operate synchronously. The links 160 can be seen from the bottom view in FIG. 1; but will become more understood with regards to the further discussion of the additional drawings.

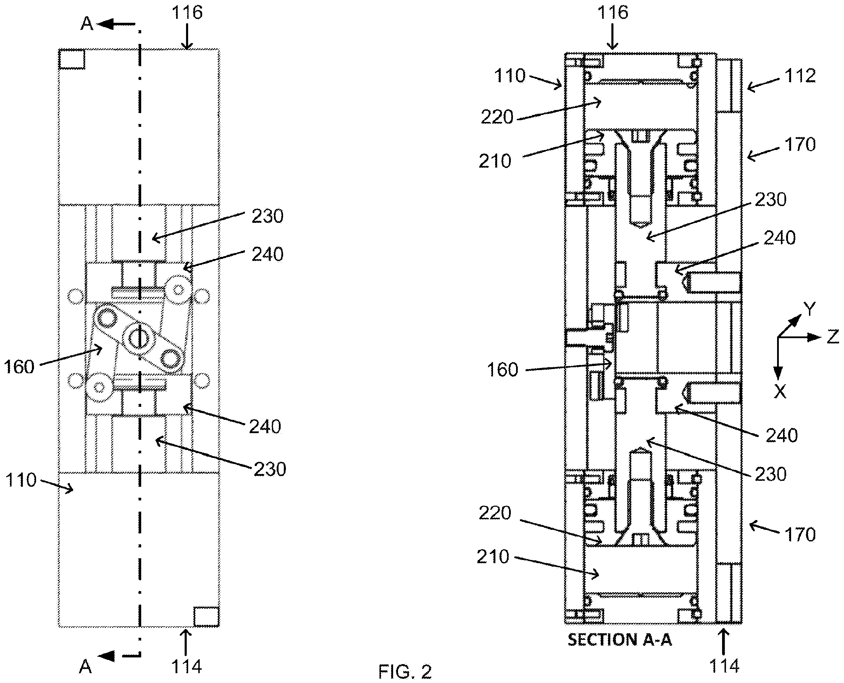

FIG. 2 illustrates a cut view of a parallel gripper device along the A-A axis; arranged in accordance with at least some embodiments described herein. The reference view illustrates the location of the cut view relative to the top surface 110, and the ends 114, 116 of the frame.

As illustrated the cut-view is taken about the A-A axis, which is aligned with a central portion of the link system. The link system is illustrated as three links 160 (or link means). A first one of the three links 160 is a first coupler (or first link means) between a shoe 240 of the first piston and a central one of the links 160 (or third link means). A second one of the three links 160 is a second coupler (or second link means) between a shoe 240 of the second piston and the central one of the links 160. The midpoint of the central link is affixed to the frame about center line A-A so that the central link acts as a pivot point (or pivot means) for the linkage between the two pistons (or piston means), which are coupled to the shoe by a respective one of the piston rods 230 (or rod means).

The cut view further illustrates the arrangement of the slidable plates 170 relative to the linkage and the piston rods 230. As illustrated, each of the slidable plates 170 is coupled to a respective one of the shoes 240, which in turn is coupled to a corresponding piston rod 230 and piston 220. Each piston 220 (or piston means) may be comprised of one or more disk shaped devices, which are sized to snugly fit in a corresponding one of the cylinders 210 (or cylinder means). Since the shoes 240 are also coupled to the linkage system, movement of a shoe 240 causes a related movement in the other shoe 240 through the linkage system 160. Also, the motion of the pistons 22 is coupled to the motion of the slidable plates 170 through the movement of the shoes 240 and the linkage system. Thus, motion of the pistons is translated into motion of the slidable plates 170 along the X axis through the operation of the linkage; where the slideable plates 170 are in an X-Y plane and the pistons 220 are in a Y-Z plane with piston motion being along the X axis.

A central portion of the central link 160 is coupled to the frame by a rotatable device (or pivot means) such as a bolt, screw, pin or rivet, for example. Each shoe 240 is coupled to a different one of the other links, which in turn is coupled to the central link. Since the central link 160 is free to pivot about a point relative to the frame, motion of the shoes 240 are coupled to one another by the rotation of the central link 160.

In some examples, each shoe 240 is formed with the corresponding slidable plate 240 as a single piece such that they are directly coupled to one another. In other examples, the slidable plate 170 is coupled to the corresponding shoe 240 with a fastener (or fastener means) such as a bolt, or screw, or pin, or rivet. In still other examples, the slidable plate 240 may be coupled to the corresponding shoe 240 by an intermediate device (or linkage means) such as a gear or shaft or some other indirect linkage mechanism.

In this example, the piston rod 230 is coupled to the corresponding shoe 240 by a channel that is formed in the shoe. However, other couplers (or coupler means) between the piston rod 230 and the shoe 240 are contemplated, inclusive of screws, bolts, pins, rivets, and other materials. Additionally, a vibration dampening, gasket or shock absorber material (or resilient means) may be used in the coupler between the shoe 240 and the piston rod 230 to improve performance and reduce backlash. The coupler (or coupler means) can be a simple elastic element, which may permit larger part tolerances for ease of assembly, and to facilitate proper operation with wear that may occur with extensive use.

The piston rod 230 is also illustrated, in this example, as coupled to the piston rings with a screw. However, other couplers between the piston rod 230 and the piston rings 220 are contemplated, inclusive of screws, bolts, pins, rivets, and other materials. Additionally, a vibration dampening, gasket or shock absorber material may be used in the coupler between the piston rod 230 and the piston rings 220 to improve performance and reduce backlash. The illustrated example shows a piston which may be made from a metal material such as aluminum. However, the piston (or piston means) may be made of other materials such as plastics, other metals, or composite materials. Additionally, the seals or piston rings (or seal means) may be disparate components that are assembled to the piston, or may be molded onto the piston to simplify assembly and service.

In the illustrated example the piston is comprised of several disk-shaped devices that are sized to snugly fit within the cylinder 210. To ensure a snug fit, each disk can include a gasket material (or seal means) such as an o-ring or piston ring, that is positioned on the circumferential edge of the disk so that it interfaces with the cylinder wall to form a seal. Any number of disks may be used for the piston, and the materials used for each disk may be varied based on the application. In some examples a magnet can be added to one of the disks so that the position of the piston can be sensed during operation. An example sensor that may be used to sense position using the magnet may be a hall-effect device, but other sensors (or sense means) are contemplated as well. Additionally, the piston disks can be replaced with another form of piston such as a single cap style piston, a bellows, a diaphragm, or some other style of piston device.

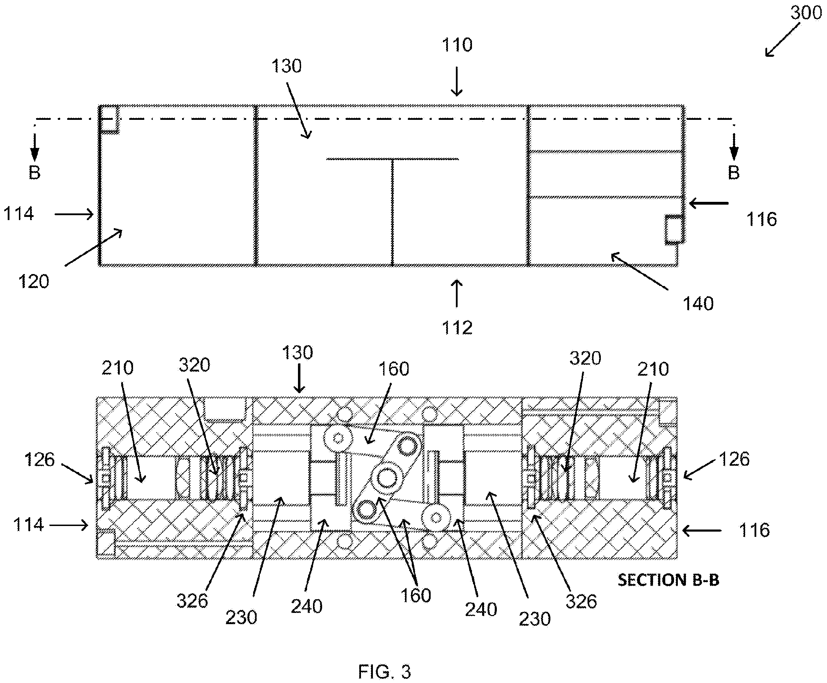

FIG. 3 illustrates a cut view of a parallel gripper device along the B-B axis; arranged in accordance with at least some embodiments described herein. The reference view illustrates the location of the cut view relative to the top surface 110, and the ends 114, 116 of the frame.

As illustrated the cut-view is taken about the B-B axis, which is aligned with a top portion of the frame. The link system again is illustrated as three links 160; but this is just for example purposes and any number of links (or link means) may be used as long as the piston operations are synchronously linked. From this perspective view, we can clearly see the links 160 coupled to each other and to the shoes 240. As before in FIG. 2, a first one of the three links 160 is a coupler between a shoe 240 of the first piston and a central one of the links 160 (e.g., the pivot means). A second one of the three links 160 is a coupler between a shoe 240 of the second piston and the central one of the links 160. The midpoint of the central link is affixed to the top of the frame, but not shown in this drawing since the top portion is cut away. The cut view further illustrates that the piston 320 may be comprised of one or more disk shaped devices, which are sized to snugly fit in a corresponding one of the cylinders 210.

Also shown in FIG. 3 is the addition of the cover plate 126 shown on the exterior wall of each cylinder 210, along with O-rings to seal the cover plate to the cylinder. Similarly, the cylinder is sealed off from the linkage system by an additional gasket 326.

Like cover plate 126 noted earlier, these interior cover plates may be fitted with slots and grooves for seals and fitment with a retention wire (e.g., a square retention wire, or retention means). Unlike cover plate 126 on the outside of the gripper cylinders, the interior cover plates have seals (or seal means) and may include a bushing to guide the piston rod to the synchronizing linkage mechanism.

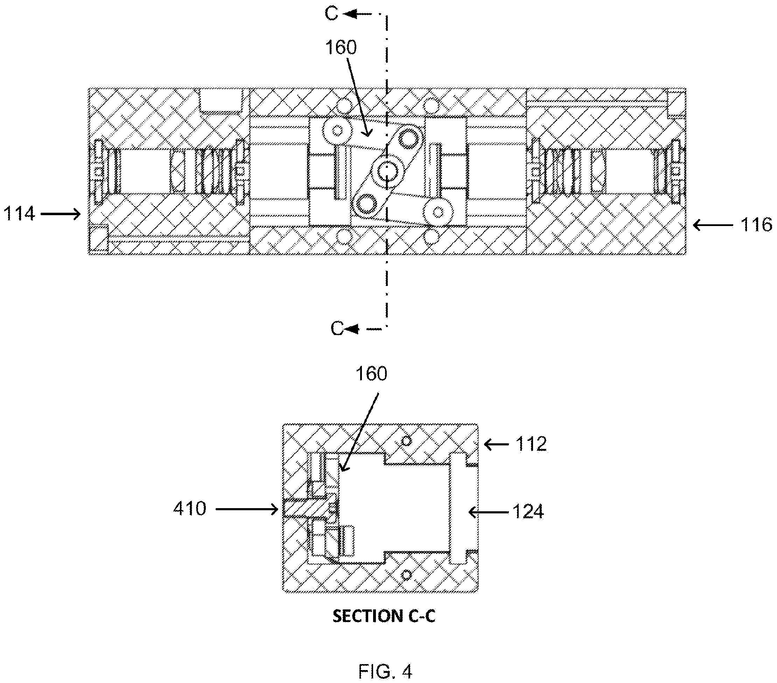

FIG. 4 illustrates a cut view of a parallel gripper device along the C-C axis; arranged in accordance with at least some embodiments described herein. The reference view illustrates the location of the cut view relative to the top surface 110, and the ends 114, 116 of the frame.

As illustrated the cut-view is taken about the C-C axis, which is a cross-sectional view between the top and bottoms of the frame. The link system again is illustrated as three links 160; but this is just for example purposes and any number of links (or link means) may be used as long as the piston operations are synchronously linked. From this perspective view, we can clearly see the central link 160 is coupled through the frame to the top surface of the frame. As illustrated a screw 410 extends from the interior portion of the frame to the top surface of the frame, passing through the central link 160. Although illustrated as a screw, the type of fastener (or coupler means) is not limited and fasteners contemplated include bolts, screws, pins, rivets, to name a few.

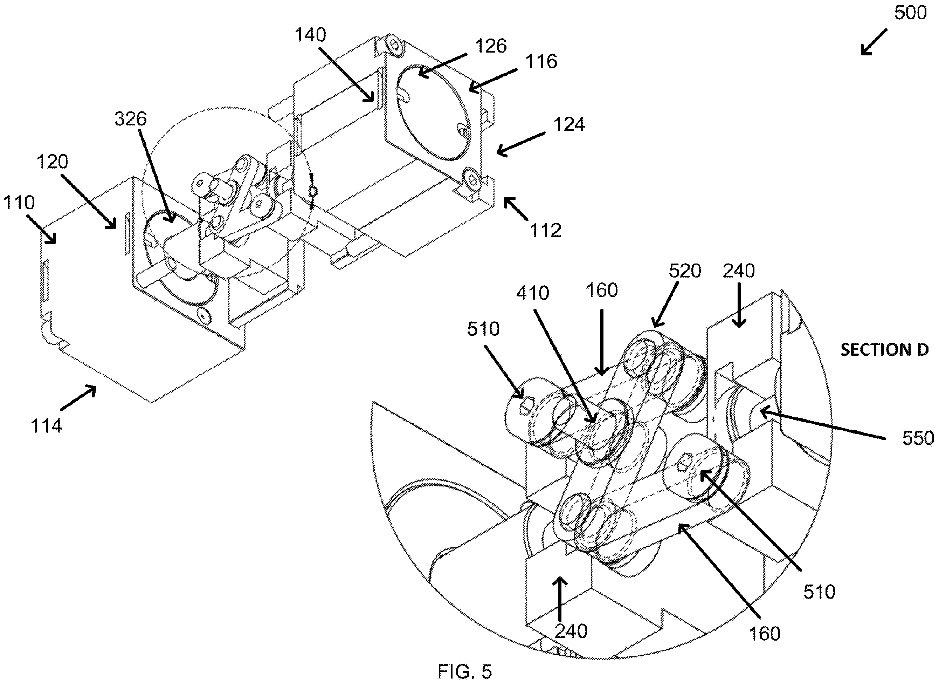

FIG. 5 illustrates a close-up view of section D of a parallel gripper device; arranged in accordance with at least some embodiments described herein. The reference view illustrates the location of the close-up view relative to the top surface 110, and the ends 114, 116 of the frame.

As illustrated the close-view is taken from section D, which is a perspective view of linkage 160. The linkage system is again is illustrated as three links 160; but this is just for example purposes and any number of links (or link means) may be used as long as the piston operations are synchronously linked. From this view, we can clearly see the central link 160 (or pivot means) is coupled through the frame to the top surface of the frame using a fastener 410. Also illustrated are cap screws 510, which are arranged to couple the shoes 240 to the corresponding links 160. Further shown is the channel 550 in the shoe 240, where the end of the piston rod is coupled to the shoe 240.

Although the fasteners 410 and 510 are illustrated as pins and cap screws, the type of fastener is not limited and fasteners (e.g., coupler means) contemplated include bolts, screws, pins, rivets, to name a few. Additionally, bushings may be utilized between the fasteners and the linkage and shoe to reduce friction, reduce binding, and improve performance of the linkage system. Suitable bushings include, metal washers, nylon washers, Teflon washers, special roller element or plain bearings, spherical bearings and the like.

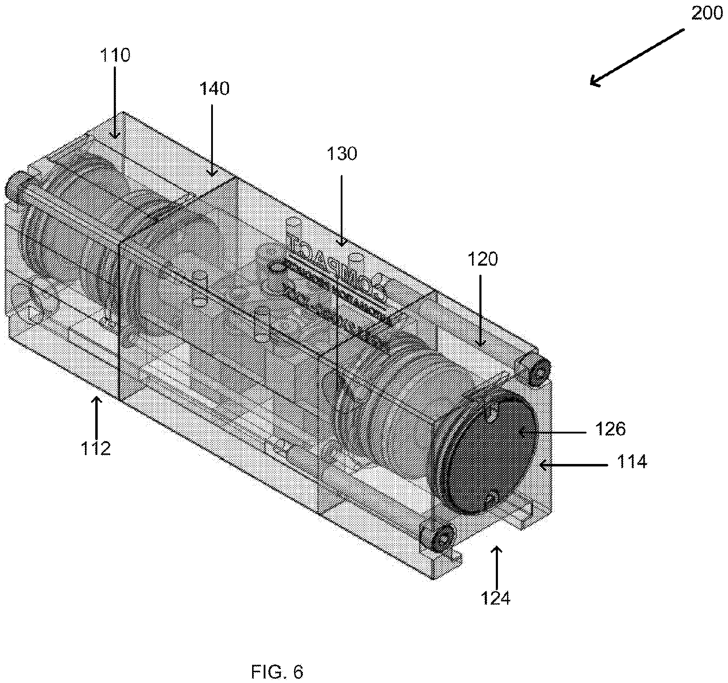

FIG. 6 illustrates a full-assembly view of a parallel gripper device; arranged in accordance with at least some embodiments described herein. This view gives a clear view of the pistons (or piston means) and their relation to the linkage system 160, cylinder, piston rods, and cover plate 126. This view also shows the pistons are in an inward position, or contracted position.

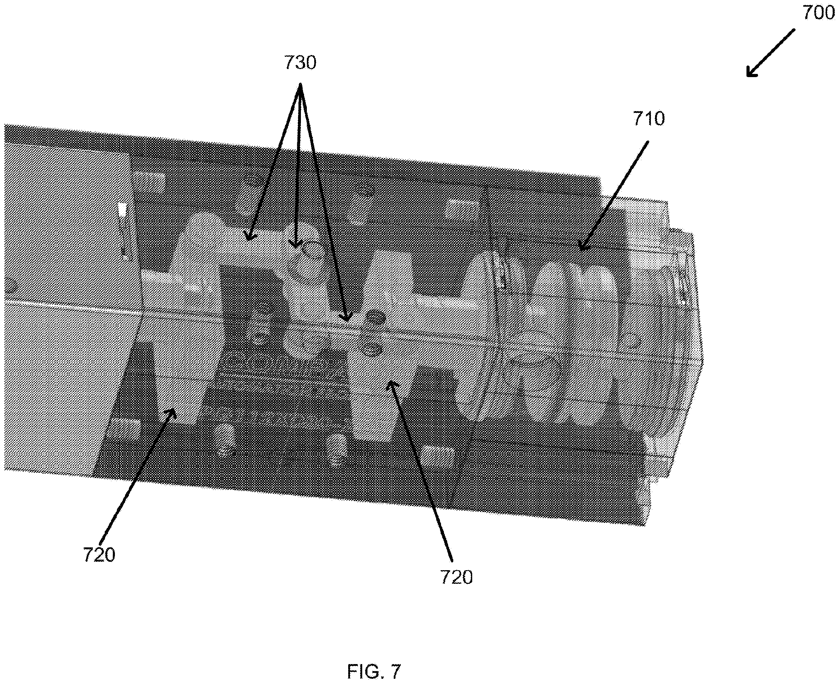

FIG. 7 illustrates a partial-assembly view of a parallel gripper device; arranged in accordance with at least some embodiments described herein. This view gives a clear view of the pistons (or piston means) 710, shoe 720, and linkage system 730 in an outward, or expanded position.

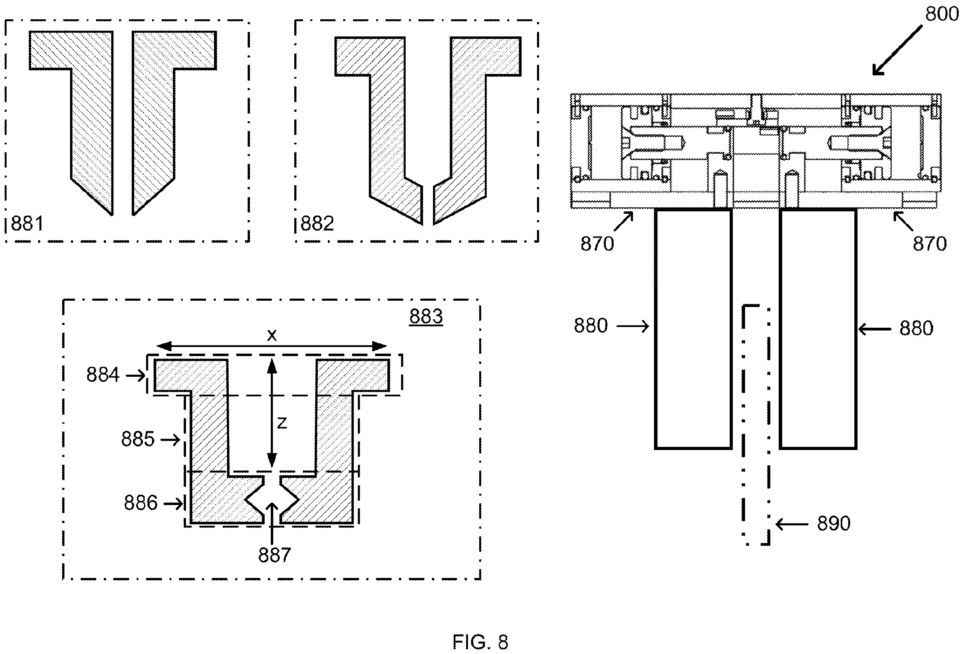

FIG. 8 illustrates a cross-sectional view of a parallel gripper device adapted for use with various example jaws, arranged in accordance with at least some embodiments described herein. As illustrated in FIG. 8, a parallel gripper device 800 includes slidable plates 870, which are coupled to the pneumatically operated pistons (or piston means) such that actuation of the gripper device causes the plates to slide along the length of the channel as the pistons move. The slidable plates 870 can be mounted to a pair of opposed jaws 880 (or grasp means) such that the gripper is adapted for use in a applications where manipulation, movement, and/or squeezing of a workpiece 890 may be desired.

The jaws (or grasp means) may be formed in a variety of shapes and sizes to accommodate a particular size, shape, and material of workpiece 890. In a simple example, the jaws 880 may be formed as a pair of opposing plates that simply extend away from the slidable plates 870 in a direction orthogonal to the motion of the slidable plates 870. Such opposing plates 870 may alternatively be formed as rectangular bars or finger like shaped devices that are substantially perpendicular with respect to the plane of the slidable plates 870. In other examples, the jaws may be formed with tapered ends such as jaws 881, which may be used to facilitate grasping applications with a more precise and confined space of use near the workpiece. In still other examples, the jaws may be formed as fingers 882, which include an elongated body and an end that is angled, or bent, inwards towards the contact area of the workpiece 890. In still further examples, the jaws may be formed as fingers 883, which include an elongated body and an end that is angled, or bent, inwards, and further has a contact portion that is notched for grasping applications.

Each of the jaws (or grasp means) may be generally described with a base or mounting portion 884, an extension portion 885, and an end portion 886. The base portion 884 extends along an X axis in the same plane of travel of the slidable plates 870, such that the base-portion 884 may be mounted or affixed to the slidable plates 870 to manipulate the jaws. The extension portion longitudinally extends along a Z axis, which is in a direction away from the slidable plates 870; and in some examples the X axis and the Z axis are an orthogonal set of axis that are substantially perpendicular. The end portion 886 extends from the longitudinal portion 885 along the X axis, but extending inwards to towards an inner region 887 where the workpiece 890 may be grasped and/or manipulated.

The jaws illustrated above are merely examples, and many additional examples of jaws (or grasp means) may be adapted for use with the described parallel gripper devices. Although the slideable plates 870 are illustrated as separate from the jaws, they may in alternative examples be formed as a single unit. Additionally, intermediary mounting components may be utilized to affix the jaws devices to the plates.

The above described technologies and devices achieve a number of benefits that have not been previously obtained. In particular, the cost of manufacturing a parallel gripper may be reduced by eliminating many of the previously coveted high precision components that are analogous to precision watch components, designed to exact specifications and with little margin for error. In contrast, the presently disclosed devices do not require special sealants, high precision components, and thus the cost of both manufacturing and servicing these devices is greatly reduced.

The presently described linkage mechanism for a parallel gripper include a variety of end use applications including but not limited to industrial automation, food processing and package handling. Additionally, due to the innovative design of the linkage and cylinders, the device may be used when submerged in liquids. Thus, additional example applications include underwater robotics applications such as handling of nuclear fuel rods, remote operated vehicles for sub-sea service, and other applications where precise gripping is required in a liquid environment.

In various examples, a synchronized linkage for a parallel gripper is described, where the parallel gripper includes having a frame, a first cylinder, and a second cylinder. The synchronized linkage comprises a first link, a second link, and a third link. The first link has a first link end and a second link end opposite the first link end, wherein the first link end is coupled to the first cylinder. The second link has a third link end and a fourth link end opposite the third link end, wherein the third link end is coupled to the second cylinder. The third link has a central pivot, a fifth link end, and a sixth link end opposite the fifth link end. The central pivot is coupled to the frame between the first cylinder and the second cylinder such that the third link is rotatable about the central pivot. The fifth link end is coupled to the second link end, and the sixth link end is coupled to the fourth link end. Synchronized motion of the first and second cylinders is facilitated by the coordinated operation of the first, second and third links.

In some examples, the synchronized linkage may further comprises: a first fastener configured to couple the first link end to the first cylinder; a second fastener configured to couple the second link end to the fifth link end; a third fastener configured to couple the third link end to the second cylinder; and a fourth fastener configured to couple the fourth link end to the sixth link end. In further examples, the first, second, third and fourth fasteners may comprise one or more of: a bolt, a screw, a pin, and a rivet. In additional examples, each of the first, second, third and fourth fasteners may include a bushing, where the bushing comprises one or more of: a metal washer, a nylon washer, a Teflon washer, a roller element, a plain bearing, or a spherical bearing.

In some examples, a synchronized parallel gripper device is described, comprising: a frame, a first cylinder, a second cylinder, a first link, a second link, and a third link. The frame has a first frame end, a second frame end that is opposite the first frame end, a first cylinder portion at the first frame end, a second cylinder portion at the second frame end, and a central portion that is between the first cylinder portion and the second cylinder portion. The first cylinder has a first piston rod located about the first cylinder portion. The second cylinder has a second piston rod located about the second cylinder portion. The first link has a first link end and a second link end opposite the first link end, wherein the first link end is coupled to the first piston rod. The second link has a third link end and a fourth link end opposite the third link end, wherein the third link end is coupled to the second cylinder. The third link has a central pivot, a fifth link end, and a sixth link end opposite the fifth link end. The central pivot is coupled to the frame about the central portion of the frame such that the third link is rotatable about the central pivot. The fifth link end is coupled to the second link end. The sixth link end is coupled to the fourth link end. Synchronized motion of the first and second piston rods is facilitated by the coordinated operation of the first, second and third links.

In some further examples, the synchronized parallel gripper device may further comprise a first shoe formed with the first piston rod, and a second shoe formed with the second piston rod. In still further examples a first shoe is coupled to the first piston rod, a second shoe is coupled to the second piston rod, where the synchronized motion of the first and second shoes is facilitated by the coordinated operation of the first and second shoe via the first, second, and third links. Some example synchronized parallel gripper devices may further comprise a channel in the first shoe that is configured to couple the first piston rod to the first shoe, and a channel in the second shoe that is configured to couple the second piston rod to the second shoe.

Various example synchronized parallel gripper devices may further comprise: a first shoe coupled to the first piston rod; a second shoe coupled to the second piston rod; a first slidable plate formed to the first shoe; and a second slidable plate formed to the second shoe; where synchronized motion of the first and second slidable plates is facilitated by the coordinated operation of the first and second shoes via the first, second, and third links.

Additional example synchronized parallel gripper devices may further comprise: a first shoe coupled to the first piston rod; a second shoe coupled to the second piston rod; a channel formed in an exterior portion of the frame; a first slidable plate coupled to the first shoe and located in the channel; and a second slidable plate coupled to the second shoe and located in the channel; where the synchronized motion of the first and second slidable plates is facilitated by the coordinated operation of the first and second shoe via the first, second, and third links. Some synchronized parallel gripper devices may further comprise: a channel located about an exterior surface of the first and second cylinder portions, where the slidable plates are urged along the channel responsive to the motion of the first and second shoes.

Some example synchronized parallel gripper devices may further comprise: a first piston coupled to the first piston rod and located in the first cylinder portion; and a second piston coupled to the second piston rod and located in the second cylinder portion. In some additional examples the first and second pistons each comprise at least one disk with a gasket positioned between a wall of the corresponding cylinder and the edge of the at least one disk. In some further examples a first fastener is configured to couple the first piston to the first piston rod; and a second fastener is configured to couple the second piston to the second piston rod.

In additional examples, a synchronized parallel gripper device is described, comprising: a frame, a first cylinder, a first slidable plate, a second cylinder, a second slidable plate, a first link, a second link, and a third link. The frame has a first frame end, a second frame end that is opposite the first frame end, a first cylinder portion at the first frame end, a second cylinder portion at the second frame end, a central portion that is between the first cylinder portion and the second cylinder portion, and a channel located about an exterior portion of the first and second frame end. The first cylinder has a first piston rod located about the first cylinder portion. The first slidable plate is located in the channel and coupled to the first piston rod. The second cylinder has a second piston rod located about the second cylinder portion. The second slidable plate is located in the channel and coupled to the second piston rod. The first link has a first link end and a second link end opposite the first link end, where the first link end is coupled to the first piston rod. The second link has a third link end and a fourth link end opposite the third link end, where the third link end is coupled to the second cylinder. The third link has a central pivot, a fifth link end, and a sixth link end opposite the fifth link end. The central pivot is coupled to the frame about the central portion of the frame such that the third link is rotatable about the central pivot. The fifth link end is coupled to the second link end, and the sixth link end is coupled to the fourth link end. Synchronized motion of the first and second slidable plates is facilitated by the coordinated operation of the first, second and third links.

In some examples, the synchronized parallel gripper device may further comprise a first piston located in the first cylinder, a second piston located in the second cylinder, where the first piston is coupled to the first piston rod and wherein the second piston coupled to the second piston rod. In additional examples, the first and second slidable plates are each affixed to a respective one of a pair of jaws such that actuation of the device results in either closing or opening of the pair of jaws. In yet other examples, each of the pair of jaws comprises a base mounting portion, an extension portion, and an end portion; where the base portion is coupled to a respective one of the first and second slidable plates, the extension portion longitudinally extends in a first direction away from the slidable plates from the base portion, and where the end portion extends from the longitudinal portion along another axis that extends inwards towards a workpiece to be grasped and/or manipulated.

In yet additional examples, a synchronized parallel gripper device is described, comprising: a frame means, a first cylinder means, a first slidable means, a second cylinder means, a second slidable means, a first link means, a second link means, and a third link means. The frame means has a first frame end, a second frame end that is opposite the first frame end, a first cylinder portion at the first frame end, a second cylinder portion at the second frame end, a central portion that is between the first cylinder portion and the second cylinder portion, and a channel located about an exterior portion of the first and second frame end. The first cylinder means has a first piston means located about the first cylinder portion. The first slidable means is located in the channel and coupled to the first piston means by a first coupler means. The second cylinder means has a second piston means located about the second cylinder portion. The second slidable means is located in the channel and coupled to the second piston means by a second coupler means. The first link means has a first link end and a second link end opposite the first link end, where the first link means is coupled to the first piston means by a third coupler means. The second link means has a third link end and a fourth link end opposite the third link end, where the third link end is coupled to the second cylinder means by a fourth coupler means. The pivot means has a central pivot, a fifth link end, and a sixth link end opposite the fifth link end. The pivot means is coupled to the central portion of the frame such that the pivot means is rotatable about the central pivot. The fifth link end is coupled to the second link end by a fifth coupler means, and the sixth link end is coupled to the fourth link end by a sixth coupler means. Synchronized motion of the first and second slidable means is facilitated by the coordinated operation of the first, second and third link means. In some further examples, the synchronized parallel gripper device of claim may further comprise a grasp means that includes a first portion coupled to the first slidable means and a second portion coupled to the second slidable means, where the first and second portions of the grasp means are arranged to grasp, manipulate and/or release a workpiece therebetween.

The present disclosure is not to be limited in terms of the particular embodiments described in this application, which are intended as illustrations of various aspects. Many modifications and variations can be made without departing from its spirit and scope. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled. The terminology used herein is for the purpose of describing particular embodiments only and is not intended to be limiting.

The herein described subject matter sometimes illustrates different components contained within, or connected with, different other components. Such depicted architectures are merely examples, and in fact, many other architectures may be implemented which achieve the same functionality. In a conceptual sense, any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable", to each other to achieve the desired functionality. Specific examples of operably couplable include but are not limited to physically connectable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

In general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation, no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

Furthermore, in those instances where a convention analogous to "at least one of A, B, and C, etc." is used, in general, such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

For any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into subranges as discussed above. Finally, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

While various aspects and embodiments have been disclosed herein, other aspects and embodiments are possible. The various aspects and embodiments disclosed herein are for purposes of illustration and are not intended to be limiting, with the true scope being indicated by the following claims.

## Claims

1. A synchronized pneumatic parallel gripper device (100), comprising
a frame having a first frame end, a second frame end that is opposite the first frame end, a first cylinder portion (120) at the first frame end, a second cylinder portion (140) at the second frame end, and a central portion (130) that is between the first cylinder portion and the second cylinder portion;
a first cylinder (210) with a first piston rod (230) located about the first cylinder portion;
a second cylinder (210) with a second piston rod (230) located about the second cylinder portion;
a synchronized linkage (160) comprising:
a first link having a first link end and a second link end opposite the first link end, wherein the first link end is coupled to the first cylinder;
a second link having a third link end and a fourth link end opposite the third link end, wherein the third link end is coupled to the second cylinder; and
a third link having a central pivot, a fifth link end, and a sixth link end opposite the fifth link end, wherein
the central pivot is coupled to the frame between the first cylinder and the second cylinder such that the third link is rotatable about the central pivot;
the fifth link end is coupled to the second link end; and
the sixth link end is coupled to the fourth link end;
wherein, synchronized motion of the first and second piston rods is facilitated by the coordinated operation of the first, second and third links;
a first shoe (240) coupled to the first piston rod;
a second shoe (240) coupled to the second piston rod;
a channel in the first shoe that is configured to couple the first piston rod to the shoe without any additional coupling elements; and
a channel in the second shoe that is configured to couple the second piston rod to the shoe without any additional coupling elements;
wherein the synchronized motion of the first and second shoes results in either closing or opening of the gripper,
and wherein the synchronized motion of the first and second shoes is facilitated by the coordinated operation of the first and second shoe via the first, second, and third links.

2. The synchronized parallel gripper device of claim 1, further comprising:
a first slidable plate formed to the first shoe; and
a second slidable plate formed to the second shoe;
wherein the synchronized motion of the first and second slidable plates is facilitated by the coordinated operation of the first and second shoes via the first, second, and third links.

3. The synchronized parallel gripper device of claim 1, further comprising:
a channel formed in an exterior portion of the frame;
a first slidable plate coupled to the first shoe and located in the channel; and
a second slidable plate coupled to the second shoe and located in the channel;
wherein the synchronized motion of the first and second slidable plates is facilitated by the coordinated operation of the first and second shoe via the first, second, and third links.

4. The synchronized parallel gripper device of claim 3, wherein the channel formed in an exterior portion of the frame is located about an exterior surface of the first and second cylinder portions, and wherein the slidable plates are urged along the channel responsive to a motion of the first and second shoes.

5. The synchronized parallel gripper device of claim 1, further comprising:
a first piston coupled to the first piston rod and located in the first cylinder portion; and
a second piston coupled to the second piston rod and located in the second cylinder portion, and optionally wherein the first and second pistons each comprise at least one disk with a gasket positioned between a wall of the corresponding cylinder and the edge of the at least one disk.

6. The synchronized parallel gripper device of claim 5, further comprising a first fastener configured to couple the first piston to the first piston rod; and a second fastener configured to couple the second piston to the second piston rod.

## Patentansprüche

1. Synchronisierte pneumatische Parallelgreifervorrichtung (100), umfassend:
einen Rahmen mit einem ersten Rahmenende, einem zweiten Rahmenende, das dem ersten Rahmenende gegenüberliegt, einem ersten Zylinderabschnitt (120) an dem ersten Rahmenende, einem zweiten Zylinderabschnitt (140) an dem zweiten Rahmenende und einem mittigen Abschnitt (130), der zwischen dem ersten Zylinderabschnitt und dem zweiten Zylinderabschnitt liegt;
einen ersten Zylinder (210) mit einer ersten Kolbenstange (230), die sich um den ersten Zylinderabschnitt herum befindet;
einen zweiten Zylinder (210) mit einer zweiten Kolbenstange (230), die sich um den zweiten Zylinderabschnitt herum befindet;
ein synchronisiertes Gestänge (160), umfassend:
eine erste Stange mit einem ersten Stangenende und einem dem ersten Stangenende gegenüberliegenden zweiten Stangenende, wobei das erste Stangenende an den ersten Zylinder gekoppelt ist;
eine zweite Stange mit einem dritten Stangenende und einem dem dritten Stangenende gegenüberliegenden vierten Stangenende, wobei das dritte Stangenende an den zweiten Zylinder gekoppelt ist; und
eine dritte Stange mit einem mittigen Drehpunkt, einem fünften Stangenende und einem dem fünften Stangenende gegenüberliegenden sechsten Stangenende, wobei
der mittige Drehpunkt zwischen dem ersten Zylinder und dem zweiten Zylinder derart an den Rahmen gekoppelt ist, dass die dritte Stange um den mittigen Drehpunkt drehbar ist;
das fünfte Stangenende an das zweite Stangenende gekoppelt ist; und
das sechste Stangenende an das vierte Stangenende gekoppelt ist;
wobei eine synchronisierte Bewegung der ersten und zweiten Kolbenstange durch den koordinierten Betrieb der ersten, zweiten und dritten Stange erleichtert wird;
einen ersten Schuh (240), der an die erste Kolbenstange gekoppelt ist;
einen zweiten Schuh (240), der an die zweite Kolbenstange gekoppelt ist;
einen Kanal in dem ersten Schuh, der dazu konfiguriert ist, die erste Kolbenstange ohne zusätzliche Kopplungselemente an den Schuh zu koppeln; und
einen Kanal in dem zweiten Schuh, der dazu konfiguriert ist, die zweite Kolbenstange ohne zusätzliche Kopplungselemente an den Schuh zu koppeln;
wobei die synchronisierte Bewegung des ersten und zweiten Schuhs entweder zum Schließen oder Öffnen des Greifers führt
und wobei die synchronisierte Bewegung des ersten und zweiten Schuhs durch den koordinierten Betrieb des ersten und zweiten Schuhs über die erste, zweite und dritte Stange erleichtert wird.

2. Synchronisierte Parallelgreifervorrichtung nach Anspruch 1, ferner umfassend:
eine erste verschiebbare Platte, die an dem ersten Schuh ausgebildet ist; und
eine zweite verschiebbare Platte, die an dem zweiten Schuh ausgebildet ist;
wobei die synchronisierte Bewegung der ersten und zweiten verschiebbaren Platte durch den koordinierten Betrieb des ersten und zweiten Schuhs über die erste, zweite und dritte Stange erleichtert wird.

3. Synchronisierte Parallelgreifervorrichtung nach Anspruch 1, ferner umfassend:
einen Kanal, der in einem äußeren Abschnitt des Rahmens ausgebildet ist;
eine erste verschiebbare Platte, die an den ersten Schuh gekoppelt ist und sich in dem Kanal befindet, und
eine zweite verschiebbare Platte, die an den zweiten Schuh gekoppelt ist und sich in dem Kanal befindet,
wobei die synchronisierte Bewegung der ersten und zweiten verschiebbaren Platte durch den koordinierten Betrieb des ersten und zweiten Schuhs über die erste, zweite und dritte Stange erleichtert wird.

4. Synchronisierte Parallelgreifervorrichtung nach Anspruch 3, wobei sich der in einem äußeren Abschnitt des Rahmens ausgebildete Kanal um eine äußere Oberfläche des ersten und zweiten Zylinderabschnitts herum befindet und wobei die verschiebbaren Platten als Reaktion auf eine Bewegung des ersten und zweiten Schuhs entlang des Kanals gedrängt werden.

5. Synchronisierte Parallelgreifervorrichtung nach Anspruch 1, ferner umfassend:
einen ersten Kolben, der an die erste Kolbenstange gekoppelt ist und sich in dem ersten Zylinderabschnitt befindet; und
einen zweiten Kolben, der an die zweite Kolbenstange gekoppelt ist und sich in dem zweiten Zylinderabschnitt befindet, und wobei optional der erste und zweite Kolben jeweils mindestens eine Scheibe umfassen, wobei eine Dichtung zwischen einer Wand des entsprechenden Zylinders und der Kante der mindestens einen Scheibe positioniert ist.

6. Synchronisierte Parallelgreifervorrichtung nach Anspruch 5, ferner umfassend ein erstes Befestigungselement, das dazu konfiguriert ist, den ersten Kolben an die erste Kolbenstange zu koppeln; und ein zweites Befestigungselement, das dazu konfiguriert ist, den zweiten Kolben an die zweite Kolbenstange zu koppeln.

## Revendications

1. Dispositif de préhension parallèle pneumatique synchronisé (100), comprenant :
un cadre comportant une première extrémité de cadre, une seconde extrémité de cadre qui est opposée à la première extrémité de cadre, une première partie de cylindre (120) au niveau de la première extrémité de cadre, une seconde partie de cylindre (140) au niveau de la seconde extrémité de cadre, et une partie centrale (130) qui se trouve entre la première partie de cylindre et la seconde partie de cylindre ;
un premier cylindre (210) avec une première tige de piston (230) située autour de la première partie de cylindre ;
un second cylindre (210) avec une seconde tige de piston (230) située autour de la seconde partie de cylindre ;
une articulation synchronisée (160) comprenant :
un premier maillon comportant une première extrémité de maillon et une deuxième extrémité de maillon opposée à la première extrémité de maillon, ladite première extrémité de maillon étant couplée au premier cylindre ;
un deuxième maillon comportant une troisième extrémité de maillon et une quatrième extrémité de maillon opposée à la troisième extrémité de maillon, ladite troisième extrémité de maillon étant couplée au second cylindre ; et
un troisième maillon comportant un pivot central, une cinquième extrémité de maillon et une sixième extrémité de maillon opposée à la cinquième extrémité de maillon,
ledit pivot central étant couplé au cadre entre le premier cylindre et le second cylindre de sorte que le troisième maillon puisse tourner autour du pivot central ;
ladite cinquième extrémité de maillon étant couplée à la deuxième extrémité de maillon ; et
ladite sixième extrémité de maillon étant couplée à la quatrième extrémité de maillon ;
le mouvement synchronisé des première et seconde tiges de piston étant facilité par le fonctionnement coordonné des premier, deuxième et troisième maillons ;
un premier sabot (240) couplé à la première tige de piston ;
un second sabot (240) couplé à la seconde tige de piston ;
un canal dans le premier sabot qui est conçu pour coupler la première tige de piston au sabot sans aucun élément de couplage supplémentaire ; et
un canal dans le second sabot qui est conçu pour coupler la seconde tige de piston au sabot sans aucun élément de couplage supplémentaire ;
le mouvement synchronisé des premier et second sabots entraînant soit la fermeture, soit l'ouverture du préhenseur,
et ledit mouvement synchronisé des premier et second sabots étant facilité par le fonctionnement coordonné des premier et second sabots par l'intermédiaire des premier, deuxième et troisième maillons.

2. Dispositif de préhension parallèle synchronisé selon la revendication 1, comprenant en outre :
une première plaque coulissante formée sur le premier sabot ; et
une seconde plaque coulissante formée sur le second sabot ;
le mouvement synchronisé des première et seconde plaques coulissantes étant facilité par le fonctionnement coordonné des premier et second sabots par l'intermédiaire des premier, deuxième et troisième maillons.

3. Dispositif de préhension parallèle synchronisé selon la revendication 1, comprenant en outre :
un canal formé dans une partie externe du cadre ;
une première plaque coulissante couplée au premier sabot et située dans le canal ; et
une seconde plaque coulissante couplée au second sabot et située dans le canal ;
ledit mouvement synchronisé des première et seconde plaques coulissantes étant facilité par le fonctionnement coordonné du premier et du second sabot par l'intermédiaire des premier, deuxième et troisième maillons.

4. Dispositif de préhension parallèle synchronisé selon la revendication 3, ledit canal formé dans une partie externe du cadre étant situé autour d'une surface externe des première et seconde parties de cylindre, et lesdites plaques coulissantes étant poussées le long du canal en réponse à un mouvement des premier et second sabots.

5. Dispositif de préhension parallèle synchronisé selon la revendication 1, comprenant en outre :
un premier piston couplé à la première tige de piston et situé dans la première partie de cylindre ; et
un second piston couplé à la seconde tige de piston et situé dans la seconde partie de cylindre, et éventuellement lesdits premier et second pistons comprenant chacun au moins un disque avec un joint positionné entre une paroi du cylindre correspondant et le bord dudit au moins un disque.

6. Dispositif de préhension parallèle synchronisé selon la revendication 5, comprenant en outre une première attache conçue pour coupler le premier piston à la première tige de piston ; et une seconde fixation conçue pour coupler le second piston à la seconde tige de piston.
